# EUROPEAN PATENT SPECIFICATION

(11) **EP 0 610 299 B1**
(45) Date of publication and mention of the grant of the patent: **15.05.1996**
(21) Application number: 92922123.2
(22) Date of filing: 16.10.1992
(51) Int. Cl.: B62D 1/18

(54) **ADJUSTABLE STEERING COLUMN ASSEMBLY**
VERSTELLBARE LENKSAÜLE
COLONNE DE DIRECTION REGLABLE

(30) Priority: 07.11.1991 GB 9123656
(43) Date of publication of application: 17.08.1994
(73) Proprietor: THE TORRINGTON COMPANY LIMITED, Coventry, Warwickshire CV4 9AE (GB)
(72) Inventor: HANCOCK, Michael, Thomas, Coventry Warwickshire CV5 7DJ (GB)
(74) Representative: Feakins, Graham Allan
(86) International application number: PCT/GB92/01906
(87) International publication number: WO 93/09015

(56) References cited:
- US-A- 4 739 673
- US-A- 4 934 737
- Patent Abstracts of Japan, Vol 11, No 296, M627, abstract of JP 62- 88662, publ 1987-04-23 (FUJI KIKO CO LTD)
- Patent Abstracts of Japan, Vol 11, No 318, M632, abstract of JP 62-101580, publ 1987-05-12 (FUJI KIKO CO LTD)

## Description

This invention relates to an adjustable steering column assembly for a vehicle.

An example of a power tiltable steering wheel is shown in US-A-4 934 737 which shows the pre-characterising features of claim 1. Such an arrangement, however, provides a so-called neck tilt of the steering wheel in which the whole of the casting is pivoted and swivelled about a pivot point located close to the steering wheel which provides a sharp angular change of tilt, with consequent disadvantage to the driver.

According to the present invention, there is provided an adjustable steering column assembly for a vehicle, comprising a steering column incorporating a prime mover mounted on a part of the steering column assembly for the tilting adjustment of the steering column, there being a pivot linkage connecting the prime mover and the steering column and incorporating a lever connecting the prime mover with an outer steering column member, one end of said lever being coupled to said outer steering column member, and the other end of the lever being pivotally linked to said prime mover, which has a reciprocating arm to turn the lever about its pivot, characterised in that said prime mover is pivotably mounted on said part of the steering column assembly, in that said lever is a bell crank lever with said one end thereof being pivotally coupled to said outer steering column member and said pivot being an intermediate pivot about which it is turned by said reciprocating arm, and in that said steering column is pivotable at an end of its major longitudinal extent remote from a steering wheel thereof to allow the column to be tiltably adjusted and the intermediate part of the bell crank lever being pivotally mounted to a fixed part spaced from said steering column.

Preferably, the prime mover is an electric motor. The motor can be pivotably mounted on a part of the steering column.

For a better understanding of the invention and to show how the same may be carried into effect, reference will now be made, by way of example, to the accompanying drawing, in which:-
Figure 1 is a diagrammatic side view of an adjustable steering column assembly for a vehicle comprising a steering column incorporating a prime mover for the adjustment of the steering column,
Figure 2 is a diagrammatic sectional view taken on the line II-II in Figure 1, and
Figure 3 is a view similar to Figure 2 taken on the line III-III in Figure 1.

The drawing shows a vehicle steering column 1 with a steering wheel 2 at a free end thereof. At the other end of the major longitudinal axial extent of the steering column 1 there is a pivotable coupling 3, which can be, for example, in the form of a constant velocity universal joint, another type of universal joint or a rubber coupling. By this means, the steering column can pivot about a pivot axis 4 in the direction indicated by the arrows A. The steering column 1 extends through an outer column 5, which itself is linked via a bell crank lever 6 to a steering column channel-shaped mounting bracket 7 which itself is mounted to a part 8 of the vehicle, which part 8 is fixed relative to the steering column when fitted for use.

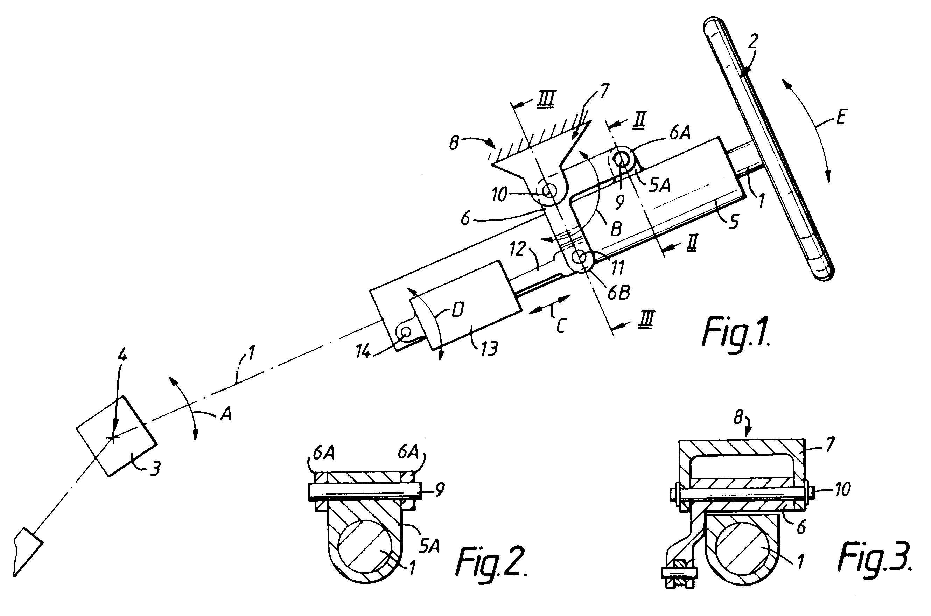

One end 6A of the bell crank lever 6 is provided with a pivot 9 about which the outer steering column 5 can pivot via a mounting bracket 5A secured thereto. That end 6A of the bell crank lever 6 is forked as shown in Figure 2.

The centre pivot axis of the bell crank lever 6 is provided with a pivot 10 about which the mounting bracket 7 is mounted. Accordingly, the lever 6 can pivot about the pivot 10, which it does in the direction of the arrows B.

The opposite end 6B of the bell crank lever 6 is also forked and is mounted about another pivot 11. Between the forks is pivotably mounted one end of an arm 12 which can reciprocate in the direction of the arrows C. The other end of the arm 12 is coupled to an electric motor 13 which itself is mounted about a pivot 14 so that the motor can pivot in the direction of the arrows D. The pivot 14 is connected to the outer column 5. The motor 13 incorporates a lead screw mechanism or gearing to convert rotary motion to reciprocating motion for the arm 12.

It will be appreciated that operation of the motor 13 reciprocates the arm 12, thereby operating the bell crank lever 6 which in turn raises and lowers the outer steering column 5 and thus the main steering column 1 and this provides vertical adjustment of the steering wheel 2 in the direction of the arrows E.

If required, a sensor or sensors can be provided to give a programmable capability to the electric motor drive.

The lever system provided by the present invention provides a very rigid and robust action which enables the electric motor to move the steering wheel satisfactorily without unacceptable backlash, play or friction in the system. This has advantage over known use of worm and wheel arrangements and sliding slipper designs, which can give excessive flexure and backlash.

## Claims

1. An adjustable steering column assembly for a vehicle, comprising a steering column (1) incorporating a prime mover (13) mounted on a part (5) of the steering column assembly for the tilting adjustment of the steering column, there being a pivot linkage connecting the prime mover and the steering column and incorporating a lever (6) connecting the prime mover with an outer steering column member (5), one end (6A) of said lever being coupled to said outer steering column member (5), and the other end (6B) of the lever being pivotally linked to said prime mover, which has a reciprocating arm (12) to turn the lever about its pivot (10), characterised in that said prime mover (13) is pivotably mounted on said part (5) of the steering column assembly, in that said lever is a bell crank lever (6) with said one end thereof being pivotally coupled to said outer steering column member (5) and said pivot (10) being an intermediate pivot (10) about which it is turned by said reciprocating arm, and in that said steering column (1) is pivotable at an end (4) of its major longitudinal extent remote from a steering wheel (2) thereof to allow the column to be tiltably adjusted and the intermediate part of the bell crank lever being pivotally mounted (10) to a fixed part (7) spaced from said steering column.

2. An assembly according to claim 1, wherein said prime mover is an electric motor.

3. An assembly according to claim 1 or 2 and being arranged such that the steering column is adjustable in a vertical plane through which the major axis of the column passes.

4. An assembly according to claim 1, 2 or 3, wherein a pivotable coupling (3) in the form of a universal joint is provided at said end (4) of the column remote from said steering wheel.

## Patentansprüche

1. Verstellbare Lenksäulenanordnung für ein Fahrzeug, mit einer Lenksäule (1), die ein Antriebsgerät (13) aufweist, das an einem Teil (5) der Lenksäulenanordnung für die neigbare Einstellung der Lenksäule angebracht ist, wobei ein Schwenkgelenk das Antriebsgerät und die Lenksäule verbindet und einen Hebel (6) aufweist, der das Antriebsgerät mit einem äußeren Glied (5) der Lenksäule verbindet, wobei ein Ende (6A) des Hebels mit dem äußeren Glied (5) der Lenksäule gekuppelt und das andere Ende (6B) des Hebels schwenkbar an dem Antriebsgerät angelenkt ist, das einen hin- und hergehenden Arm (12) hat, um den Hebel um seinen Schwenkpunkt (10) zu drehen, **dadurch gekennzeichnet**, daß das Antriebsgerät (13) schwenkbar an dem Teil (5) der Lenksäulenanordnung angebracht ist, daß der Hebel ein Winkelhebel (6) ist, dessen eines Ende schwenkbar mit dem äußeren Glied (5) der Lenksäule gekuppelt ist, wobei der Schwenkpunkt (10) ein Zwischenpunkt (10) ist, um den er durch den hin- und hergehenden Arm verdreht wird, und daß die Lenksäule (1) an einem Ende (4) ihrer Hauptlängserstreckung entfernt von einem daran befindlichen Lenkrad (2) schwenkbar ist, um es der Säule zu gestatten, durch Neigung eingestellt zu werden, und wobei der Zwischenteil des Winkelhebels schwenkbar (10) an einem festen Teil (7) angebracht ist, der mit Abstand von der Lenksäule angeordnet ist.

2. Anordnung nach Anspruch 1, bei der das Antriebsgerät ein Elektromotor ist.

3. Anordnung nach Anspruch 1 oder 2, die so getroffen ist, daß die Lenksäule in einer lotrechten Ebene verstellbar ist, durch die die Hauptachse der Säule hindurchgeht.

4. Anordnung nach Anspruch 1, 2 oder 3, bei der eine schwenkbare Kupplung (3) in der Form eines Universalgelenks an dem von dem Lenkrad entfernten Ende (4) der Säule vorgesehen ist.

## Revendications

1. Ensemble de colonne de direction réglable pour véhicule, comprenant une colonne de direction (1) qui possède un élément moteur primaire (13) monté sur une partie (5) de l'ensemble de colonne de direction pour le réglage de l'inclinaison de la colonne de direction, une articulation de pivot reliant l'élément moteur primaire à la colonne de direction et possédant un levier (6) qui relie l'élément moteur primaire à un élément extérieur (5) de la colonne de direction, une extrémité (6A) dudit levier étant accouplée audit élément extérieur (5) de la colonne de direction et l'autre extrémité (6B) du levier étant articulée audit élément moteur primaire, lequel possède un bras alternatif (12) pour faire tourner le levier autour de son pivot (10), caractérisé en ce que ledit élément moteur primaire (13) est monté pivotant sur ladite partie (5) de l'ensemble de colonne de direction, en ce que ledit levier est un levier coudé (6) dont une première extrémité est accouplée par articulation audit élément extérieur (5) de la colonne de direction et ledit pivot (10) étant un pivot intermédiaire (10) autour duquel il tourne sous l'action dudit bras alternatif, et en ce que ladite colonne de direction (1) peut pivoter à une extrémité (4) de son étendue longitudinale qui est la plus éloignée de son volant de direction (2) pour permettre le réglage de l'inclinaison de la colonne et la partie intermédiaire du levier coudé étant montée pivotante (10) sur une partie fixe (16) espacée de ladite colonne de direction.

2. Ensemble selon la revendication 1, dans lequel ledit élément moteur primaire est un moteur électrique.

3. Ensemble selon la revendication 1 ou 2, et étant agencé de telle manière que la colonne de direction soit réglable dans un plan vertical traversé par le grand axe de la colonne.

4. Ensemble selon la revendication 1, 2 ou 3, dans lequel l'accouplement pivotant (3), formé d'un joint universel, est prévu à ladite extrémité (4) de la colonne qui est éloignée dudit volant de direction.
